# EUROPEAN PATENT APPLICATION

(11) **EP 1 936 774 A1**
(43) Date of publication of application: **25.06.2008**
(21) Application number: 06797224.0
(22) Date of filing: 31.08.2006
(51) Int. Cl.: H02J 1/00, H02J 7/00, H04L 9/32

(54) **AC ADAPTER, ELECTRONIC DEVICE, AND POWER SUPPLY SYSTEM**

(30) Priority: 14.10.2005 JP 2005300863
(71) Applicant: Mitsumi Electric Co., Ltd., Tama-shi, Tokyo 206-8567 (JP)
(72) Inventor: IKEUCHI, Akira, Atsugi-shi, Kanagawa 2438533 (JP); YAMANAKA, Yuji, Atsugi-Shi, Kanagawa 2438533 (JP); HIROSHIMA, Takashi, Atsugi-Shi, Kanagawa 2438533 (JP)
(74) Representative: Vinsome, Rex Martin
(86) International application number: PCT/JP2006/317264
(87) International publication number: WO 2007/043250

(57) **Abstract**

An AC adapter includes an AC/DC converter device for transforming an alternating-current power to a direct-current power, a power supply line that supplies the direct-current power converted by the AC/DC converter device to an electronic apparatus, and a memory for storing an AC adapter ID that identifies the AC adapter.

## Description

### TECHNICAL FIELD

The present invention generally relates to an AC/DC converter device transforming alternating-current power (AC power) into direct-current power (DC power), an AC adapter having a power supply line supplying direct current (DC) power transformed by the AC/DC converter device to an electronic apparatus using the power line, an electronic apparatus connected to the AC adapter, and a power supply system.

### BACKGROUND ART

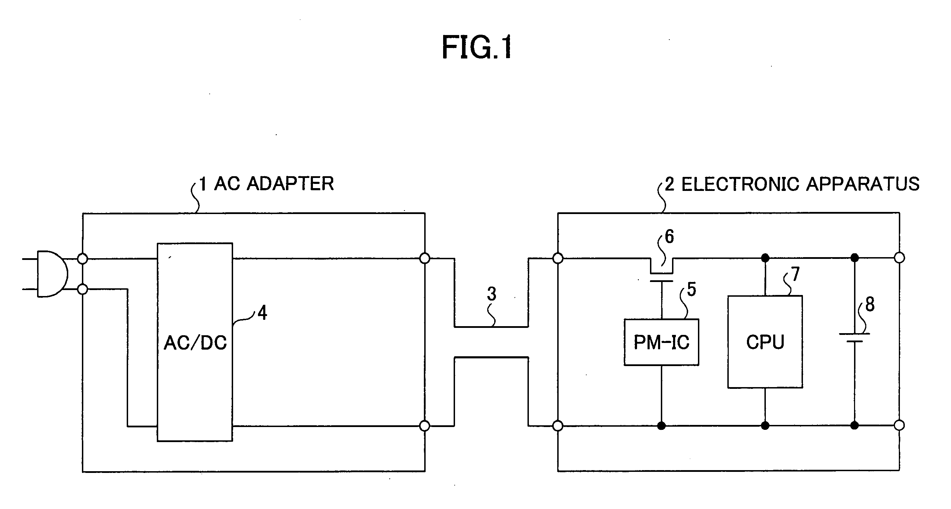

In general, it is known that an AC adapter transforms commercial alternating-current (AC) power into direct-current (DC) power and supplies the DC power to an electronic apparatus which requires a constant DC power source. FIG. 1 shows a power supply system configured by an AC adapter and an electronic apparatus that are provided by a related art case. The AC adapter 1 and the electronic apparatus 2 are connected via a power supply line 3. The AC adapter 1 includes an AC/DC converter device 4 that transforms the AC power into the DC power.

The electronic apparatus 2 includes a power management IC (PM-IC) 5, a switching transistor 6, a central processing unit (CPU) 7, and a battery 8. The power management IC 5 is a device that controls the power supply from the AC adapter 1 to the battery 8 by controlling the switching transistor 6 with ON-OFF control. The central processing unit 7 plays a role in controlling the overall operation of the electronic apparatus 2.

In recent years, batteries (e.g. lithium ion batteries) in electronic apparatuses having power supply using AC adapters and imitations of the AC adapters have been shipped to the market place. This raises safety issues for charging the batteries, and it is suggested to perform mutual identification of the AC adapters and the electronic apparatuses.

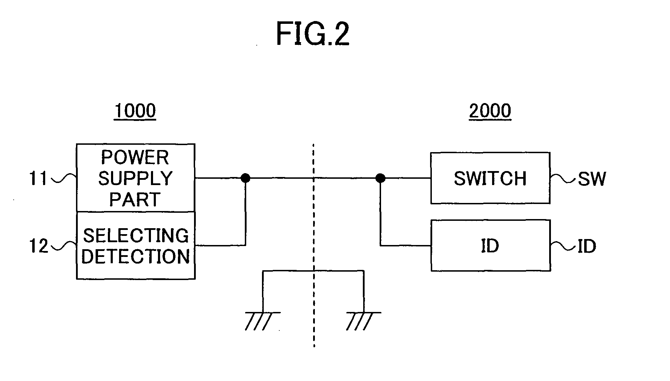

For example, in Japanese Patent Application Publication 2000-333376 (patent reference 1), a power supply system is described such that when an electronic apparatus having an ID signal and the corresponding AC adapter are connected, the AC adapter detects the ID signal of the electronic apparatus and if the electronic apparatus is recognized as a matched one according to the ID signal, the power is supplied from the AC adapter to the electronic apparatus. FIG. 2 shows the power supply system disclosed in the above patent reference 1.

The power supply system of FIG. 2 is configured with a power supply part 11, an AC adapter 1000 having a detection selection circuit 12 connected to the power supply part 11, and a set (electronic apparatus) 2000 including a power switch SW and an identification signal part ID at an input stage.

Patent reference 1: Japanese Patent Application Publication 2000-333376

### DISCLOSURE OF THE INVENTION

### PROBLEMS TO BE SOLVED BY THE INVENTION

The power supply system described in patent reference 1 seems to prevent the use of imitation AC adapters. However, such use is not prevented, because imitation AC adapters may be manufactured once the ID signals of the electronic apparatuses are known.

The present invention may provide an AC adapter, an electronic apparatus including the AC adapter, and a power supply system including the AC adapter and the electronic apparatus to prevent connecting imitation AC adapters to electronic apparatuses.

### MEANS FOR SOLVING PROBLEMS

According to an embodiment of the present invention, an AC adapter may include an AC/DC converter device for transforming an alternating-current power to a direct-current power, a power supply line for supplying the direct-current power converted by the AC/DC converter device to an electronic apparatus, and a memory for storing an AC adapter ID that identifies the AC adapter.

Thereby, it becomes possible to identify a right product, which results in preventing the use of imitation products.

According to another embodiment of the present invention, the AC adapter may include a sender device for switching an electric potential on the power supply line by plural electric potentials for sending a signal to the electronic apparatus.

By using a power line for sending a signal from the AC adapter to the electronic apparatus, no additional communication line is required for the communication between the AC adapter and the electronic apparatus.

According to another embodiment of the present invention, the AC adapter may include a receiver device for detecting plural electric potentials on the power supply line for receiving a signal sent from the electronic apparatus.

By using a power line for receiving a signal from the electronic apparatus to the AC adapter, no additional communication line is required for the communication between the AC adapter and the electronic apparatus.

According to another embodiment of the present invention, the AC adapter may include a process device for processing the signal received by the receiver device using the AC adapter ID stored in the memory, wherein a result of the process device is sent by the sender device to the electronic apparatus.

Thereby, the electronic apparatus recognizes that the connected AC adapter is the right AC adapter.

According to another embodiment of the present invention, the AC adapter may include an output control device for controlling a power supply to be supplied to the electronic apparatus, wherein the output control device is controlled according to the signal sent from the electronic apparatus and received by the receiver device.

Thereby; the power supplied to the electronic apparatus is controlled by the AC adapter that is controlled by a signal of the electronic apparatus sent to the AC adapter.

According to another aspect of the present invention, an electronic apparatus connected to an AC adapter through a power supply line may include a sender device for sending a signal having random numbers to the AC adapter, an arithmetic device for processing arithmetically the random numbers, a receiver device for receiving a signal processed by the AC adapter according to the random numbers and sent from the AC adapter, a comparator device for comparing the signal received by the receiver device and a processed signal processed by the arithmetic device, wherein a control signal is sent to the AC adapter for controlling the AC adapter according to the result of the comparator device.

Thereby, the electronic apparatus recognizes that the connected AC adapter is the right AC adapter.

According to another aspect of the present invention, the sender device may send a signal to the AC adapter by controlling the power supply line using ON-OFF control.

By using a power line for sending a signal from the electronic apparatus to the AC adapter, no additional communication line is required for the communication between the AC adapter and the electronic apparatus.

According to another embodiment of the present invention, the receiver device may receive a signal from the AC adapter by detecting electric potentials switched by plural electronic potentials on the power supply line.

By using a power line for receiving a signal from the AC adapter to the electronic apparatus, no additional communication line is required for the communication between the AC adapter and the electronic apparatus.

According to another aspect of the present invention, the electronic apparatus may include a charge control device, wherein the sender device sends the signal to the AC adapter by controlling the charge control device with ON-OFF control.

Thereby, when an electronic apparatus includes a charge control device, a signal can be sent to the AC adapter with ON-OFF control of a charge control FET, so that no additional device is required to achieve the present embodiment.

According to another aspect of the present invention, a power supply system may include an AC/DC converter device for transforming an alternating-current power to a direct-current power; an electronic apparatus supplied with the direct-current power converted by the AC/DC converter device through a power supply line; wherein the AC adapter includes a memory for storing data to identify the AC adapter, a first receiver device for receiving a second signal sent from the electronic apparatus, a process device processing the second signal received by the first receiver device according to the data stored in the memory, and a first sender device for sending a processed result of the process device to the electronic apparatus; and wherein the electronic apparatus includes a second sender device for sending the second signal having random numbers to the AC adapter, an arithmetic device for processing the random numbers, a second receiver device for receiving a first signal processed based on the random numbers by the AC adapter and sent from the AC adapter, a comparator for comparing the first signal received by the electronic apparatus and a signal processed by the arithmetic device, wherein the second signal is sent to the AC adapter to control the AC adapter according to a result of the comparator.

According to another aspect of the present invention, a sending signal and a receiving signal may be performed via a power supply line or a communication line only for use in communications.

### EFFECT OF THE INVENTION

According to an embodiment of the present invention, an AC adapter, an electronic apparatus, and a power supply system consisting of the AC adapter and the electronic apparatus are produced so that it becomes possible to identify a right product, which results in preventing the use of imitation products.

### BRIEF DESCRIPTION OF THE DRAWINGS

FIG. 1 is a configuration diagram of a power supply system including an AC adapter and an electronic apparatus relating to related art;
FIG. 2 is a diagram showing a power supply system disclosed in Japanese Patent Application Publication 2000-333376;
FIG. 3 is a block diagram showing an AC adapter and an electronic apparatus according to an embodiment of the present invention and a power supply system configured with the AC adapter and the electronic apparatus;
FIG. 4 is a graph indicating a signal to be sent from the AC adapter to the electronic apparatus of the power supply system shown in FIG. 3;
FIG. 5 is a graph indicating a signal to be sent from the electronic apparatus to the AC adapter of the power supply system shown in FIG. 3; and
FIG. 6 is a circuit diagram of the power supply system configured with the AC adapter and the electronic apparatus according to an embodiment of this invention.

### EXPLANATION OF REFERENCE NUMERALS AND REFERENCE LETTERS

1, 10, 100, 1000 AC ADAPTER
2, 20, 200, 2000 ELECTRONIC APPARATUS
3, 300, 30 POWER SUPPLY LINE
4 AC/DC CONVERTER DEVICE
5 POWER MANAGEMENT IC
6 SWITCHING TRANSISTOR
7 CENTRAL PROCESSING UNIT
8, 250, 58 BATTERY
11 POWER SUPPLY PART
12 SELECTING DETECTION CIRCUIT
110, 52 AC/DC CONVERTER
120 MEMORY
130 FIRST RECEIVER DEVICE
230 SECOND RECEIVER DEVICE
150 FIRST SENDER DEVICE
210 SECOND SENDER DEVICE
160 OUTPUT CONTROL DEVICE
211 LINE CONTROL DEVICE
220 ARITHMETIC DEVICE
240 COMPARATOR DEVICE
51 TRANSFORMER
53 ADAPTER CONTROL IC
54, 56 ADAPTER ID-IC
55 CHARGE CONTROL IC
57 CHARGE CONTROL FET
531 VOLTAGE DETECTION DEVICE
532 VOLTAGE SWITCH DEVICE
533 OUTPUT VOLTAGE CONTROL DEVICE
534 OUTPUT CONTROL FET
552 EXCESS CURRENT FLOW CONTROL DEVICE
553 EXCESS CHARGE CONTROL DEVICE
554 FET CONTROL DEVICE
ID IDENTIFICATION SIGNAL PART
SW POWER SWITCH
SW₀ SWITCH
R1, R2, R3 RESISTOR
Vref1, Vref2, Vref3 REFERENCE VOLTAGE

### BEST MODE FOR CARRYING OUT THE INVENTION

Referring to the figures, one or more embodiments related to the present invention are described in the following.

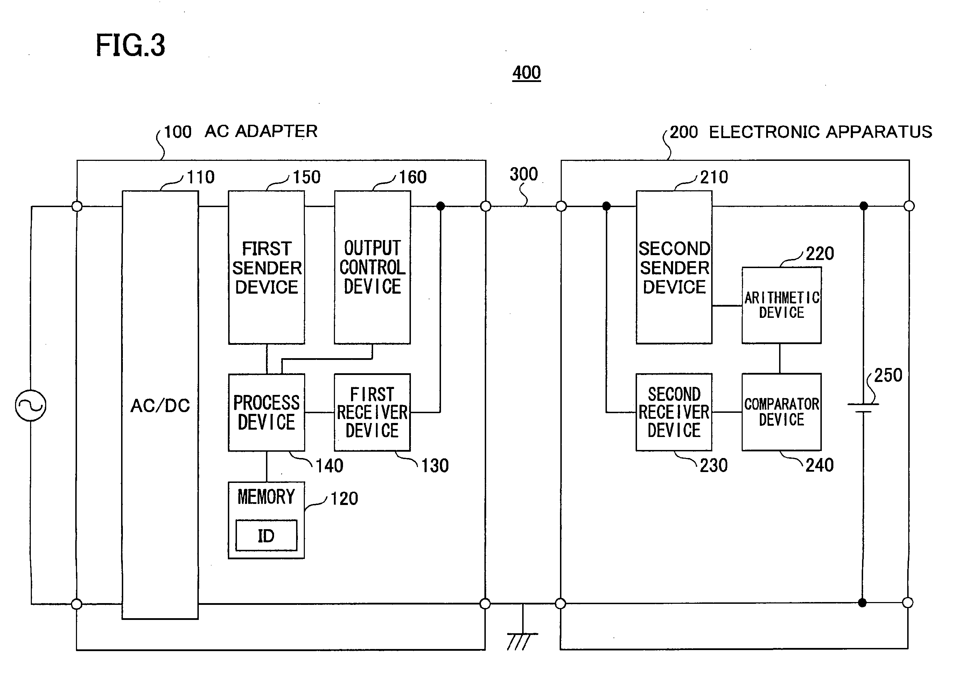

FIG. 3 shows one example of a basic configuration of a power supply system 400 having an AC adapter 100 and an electronic apparatus 200 according to the embodiment. In FIG. 3, the AC adapter 100 and the electronic apparatus 200 of the power supply system 400 are connected by an electric power supply line 300.

The AC adapter 100 includes an AC/DC converter device 110, a memory 120, a first receiver device 130, a process device 140, a first sender device 150, and an output control device 160. The AC/DC converter device 110 provides a method of transforming power from alternating-current (AC) power to direct-current (DC) power, and the transformed DC power is supplied to the electronic apparatus 200 through the power supply line 300.
The memory 120 is a device for storing data of the AC adapter ID to identify the AC adapter 100. The first receiver device 130 is for receiving a signal from the electronic apparatus 200. The first receiver device 130 can receive the signal by detecting plural electrical potentials that appear on the power supply line 300. The process device 140 is for processing a signal received by the first receiver device 130 according to the data of the adapter ID stored in the memory 120. The first sender device 150 sends a process result of the process device 140 to the electronic apparatus 200 by switching plural electric potentials of the power supply line. The output control device 160 controls the electric power to be supplied to the electronic apparatus 200. The output control device 160 is controlled by using a signal of the electronic apparatus 200, which signal is received by the first receiver device 130.

The electronic apparatus 200 includes a second sender device 210, an arithmetic device 220, a second receiver device 230, a comparator device 240, and a battery 250. The second sender device 210 sends a signal including random numbers to the AC adapter 100 by performing ON-OFF control of the electric power to be supplied from the AC adapter 100 to the battery 250. The arithmetic device 220 performs arithmetic operations for the same random numbers which are included in the signal sent from the second sender device 210 to the AC adapter 100. The second receiver device 230 receives a signal sent from the AC adapter 100. The AC adapter sends a processed signal after processing the signal that is originally sent from the second sender device 210. The comparator device 240 compares signals received by the receiver device 230 and another signal arithmetically processed by the arithmetic device 220. Further, the second sender device 210 sends a signal for controlling the AC adapter 100 according to the comparison result of the comparator device 240.

### [OPERATION]

With reference to the power supply system 400 of FIG. 3, the first communicating operation is described for a case where the AC adapter 100 is connected to the electronic apparatus 200 via the power supply line 300.

When the AC adapter 100 is connected to the electronic apparatus 200, the second sender device 210 of the electronic apparatus 200 sends a signal having random numbers to the AC adapter 100. The signal sent by the electronic apparatus 200 is received by the first receiver device 130 of the AC adapter 100. The random numbers included in the received signal are processed by the process device 140 based on ID data stored in the memory 120, and the same random numbers included in the signal sent to the AC adapter 100 are processed by the arithmetic device 220 of the electronic apparatus 200 as well. Next, the processed result of the process device 140 of the AC adapter 100 is sent to the electronic apparatus 200 by using the first sender device 150. The processed result sent from the AC adapter 100 is received by the second receiver device 230 of the electronic apparatus 200 and compared with a process result of the arithmetic device 220 by using the comparator device 240 of the electronic apparatus 200. When the processed result obtained by the AC adapter 100 matches that obtained by the electronic apparatus 200, the electronic apparatus 200 recognizes the AC adapter 100 as a proper adapter. When the result of the AC adapter 100 and the result of the electronic apparatus 200 do not match each other, i.e. the connected AC adapter 100 is an improper adapter, the electronic apparatus 200 disconnects the supplied power from the adapter 100 by using an inner circuit of the electronic apparatus 200. Further, the electronic apparatus 200 may send a signal to the AC adapter 100 by using the second sender device 210 to operate the output control device 160 for disconnecting the supplied power.

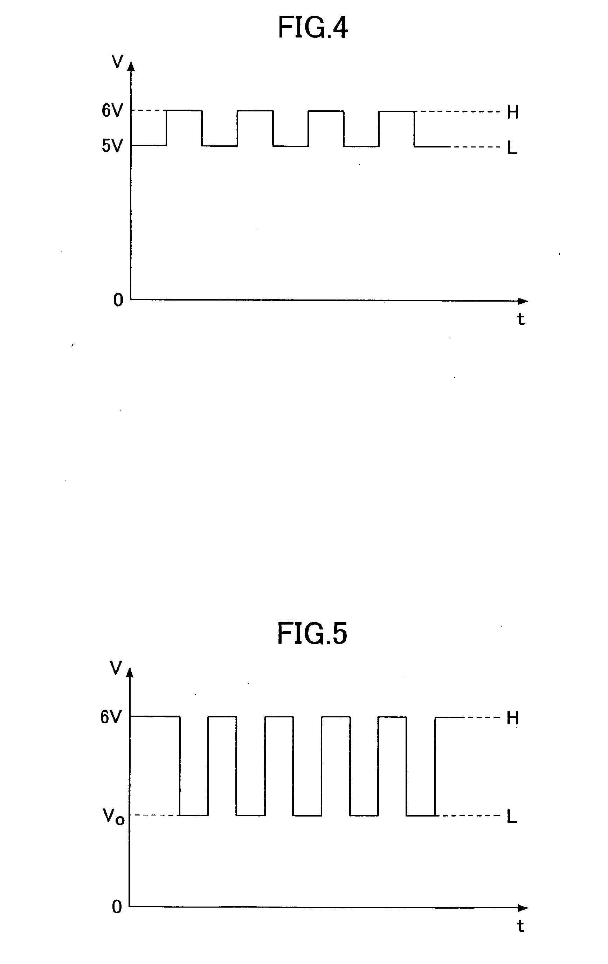

Referring to FIG. 4 and FIG. 5, the following describes details of a method for sending and receiving signals between the AC adapter 100 and the electronic apparatus 200 using the power supply line.

FIG. 4 shows a signal to be sent from the AC adapter 100 to the electronic apparatus 200. The vertical axis indicates voltage V supplied from the AC adapter 100 to the electronic apparatus 200, and the horizontal axis indicates time t. The voltage is switched alternately between 5 V and 6V using the output control device 160. By defining the voltages as a signal, 5 V as LOW (L) and 6 V as HIGH (H), a binary signal represented by 0 (zero) and 1 (one) can be sent by switching the voltage L and H. The electronic apparatus 200 receives a signal from the AC adapter by detecting the voltage (electric potential) change using the second receiver device 230.

FIG. 5 shows a signal to be sent from the electronic apparatus 200 to the AC adapter 100. In the same manner as FIG. 4, the vertical axis indicates the voltage V to be supplied from the electronic apparatus 200 to the AC adapter 100, and the horizontal axis indicates time t. The voltage V is switched between voltage V₀ of the battery 250 and 6 V, the output voltage of the AC adapter 100, by controlling the electric power supply of the AC adapter 100 by ON-OFF control using the second sender device 210 of the electronic apparatus 200. While the output voltage of the AC adapter 100 to the electronic apparatus 200 is provided at two levels, 5 V and 6 V, the output voltage of the electronic apparatus 200 to the AC adapter 100 is provided at one level at 6 V. The voltage level V₀ is the voltage of the battery 250. For example, when a lithium battery is used, the voltage V₀ is approximately 3 V through approximately 4.2 V. When 'LOW' (L) is defined by the voltage V₀ and 'HIGH' (H) is 6 V, a binary signal designated by '0' and '1' can be sent by switching the voltage H and L. The AC adapter 100 can receive the signal from the electronic apparatus 200 by detecting the voltage (electric potential) change using the first receiver device 130.

### [VARIATION]

For the identification to be performed by the communications between the AC adapter 100 and the electronic apparatus 200 when the AC adapter 100 is connected to the electronic apparatus 200, as another operation separate from the operation described above, the identification may be performed by sending the ID data of the AC adapter 100 to the electronic apparatus 200 without processing, and the electronic apparatus 200 confirms whether the AC adapter 100 is a proper adapter for the electronic apparatus 200. On the other hand, the identification may be performed by an operation in which the electronic apparatus 200 sends a signal and the signal is compared with the ID data of the AC adapter.

Further, in the embodiment above, only the initial communication is described for the operation in which the AC adapter 100 is connected to the electronic apparatus 200. The identification described above may be performed while the AC adapter 100 is supplying the electric power to the electronic apparatus 200.

Although only the initial communication between the AC adapter 100 and the electronic apparatus 200 is described above, communicating a request for changing voltage or communicating a request from the electronic apparatus 200 to the AC adapter 100 for stopping the power supply is possible when the battery is in an abnormal status. Further, the same manner of communications from the AC adapter 100 to the electronic apparatus 200 may be performed.

The power supply system 400 utilizes only the power supply line, and the AC adapter 100 and the electronic apparatus 200 send signals to their corresponding communication partners when they are not receiving a signal.

### EMBODIMENT

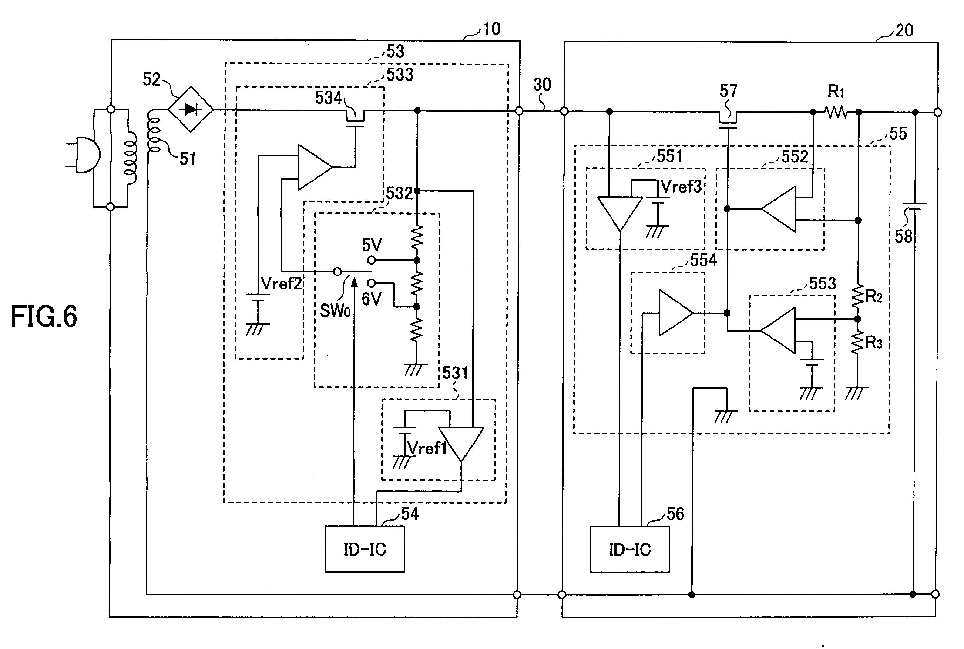

FIG. 6 shows one embodiment of a circuit diagram of a power supply system that includes an AC adapter 10 and an electronic apparatus 20 having a charge control circuit.

In FIG. 6, the AC adapter 10 and the electronic apparatus 20 are connected via the power supply line 30.

The AC adapter 10 includes a transformer 51, an AC/DC converter 52, an adapter control IC 53, and an adapter ID-IC 54. The transformer 51 transforms an AC voltage to a predetermined AC voltage, and the AC/DC converter device 52 converts the predetermined AC voltage transformed by the transformer 51 to direct-current (DC) power.

The adapter control IC 53 is a device that controls the DC power converted by the AC/DC converter 52 for sending the DC power to the electronic apparatus 20, and includes a voltage detection device 531, a voltage switch device 532, and an output voltage control device 533. The voltage detection device 531 detects a voltage (electric potential) fluctuation of the power supply line 30, and compares the voltage fluctuation with a reference voltage Vref1. The reference voltage Vref1 is almost equal to the output voltage of the battery 58 (e.g. a lithium ion battery provides 4.2 V) and the voltage of the power supply line 30. The voltage detection device 531 corresponds to the first receiver device 130 of FIG. 3. The voltage switch device 532 switches the output voltage level to be 5 V or 6 V, and corresponds to the first sender device 150 of FIG. 3. The output voltage control device 533 controls the output power, and includes an output control FET (Field Effect Transistor) 534 corresponding to the output control device 160 of FIG. 3. The output FET 534 is a device that controls the output power to be sent to the electronic apparatus 20. The adapter ID-IC 54 is a circuit that includes an AC adapter ID for indentifying the AC adapter, processing a signal detected by the voltage detection device 531 according to the ID data, and controlling the output voltage control device 53 according to the processed output result. The adapter ID-IC 54 corresponds to the memory 120 and the process device 140 of FIG. 3.

The electronic apparatus 20 includes a charge control IC 55, an ID-IC 56, a charge control FET 57, and a battery 58. The charge control IC 55 is a circuit that detects the voltage of the power supply line 30 and controls the operation of charging the battery 58. The charge control IC 55 includes a voltage detection device 551, an excess current flow control device 552, an excess charge control device 553, and a FET control device 554.

The voltage detection device 551 detects the voltage fluctuation of the power supply line 30 and compares the voltage of the power supply line 30 and the reference voltage Vref3 (6 V in this embodiment), which is almost equal to the output voltage of the AC adapter 10. The voltage detection device 551 corresponds to the second receiver device 230 of FIG. 3. The excess current flow control device 552 prevents an excess current flow condition of the battery 58 during charging the battery 58, where the excess current flow control device 552 detects an excess current flowing through a resistor R1 connected to the positive terminal of the battery 58 and performs ON-OFF control of the charge control FET 57 according to the detection result. The excess charge control device 553 prevents an excess charge condition of the battery 58 during charging the battery 58, where a resistor R2 and a resistor R3 in series are parallel to the battery 58 and the divided potential at the connection between the two resistors R2 and R3 is used to detect the voltage of the battery 58. The excess charge control device 553 performs ON-OFF control of the charge control FET 57 according to the detection result. The FET control device 554 controls a voltage of the power supply line 30 by controlling the excess charge control FET 57. The ID-IC 56 is a circuit that includes ID data to identify a corresponding AC adapter by using the ID data and a signal detected by the voltage detection device 551. The ID-IC 56 controls the power to be supplied by the AC adapter 10 according to the identification result. The ID-IC 56 corresponds to the arithmetic device 220 and the comparator device 240 of FIG. 3.

The charge control FET 57 is a switch that controls the power to be supplied through the power supply line 30 by ON-OFF control. The charge control FET 57 controls the power supply line 30 by ON-OFF control, when an excess current flow or an excess charge is detected by the excess current control device 552 or the excess charge control device 553, respectively, or when a control signal is sent from the ID-IC 56 through the FET control device 554. The FET control device 554 and the charge control FET 57 correspond to the second sender device 210 of FIG 3.

### [OPERATION]

The following describes operations when the AC adapter 10 is connected to the electronic apparatus 20 with the power supply line 30.

When the AC adapter 10 and the electronic apparatus 20 are connected to each other, the DC power converted from the AC power by the AC adapter 10 is provided as the output. A switch SWo of the voltage switch device 532 is switched to the 6 V side, and the output control FET 534 is set in the ON condition. Then the electronic apparatus 20 is supplied a voltage of 6 V. The charge control FET 57 of the electronic apparatus 20 is set to be ON as the initial condition, so that 6 V is applied to the battery 58.

The ID-IC 56 of the electronic apparatus 20 sends a signal including random numbers to the FET control device 554, and the FET control device 554 controls the charge control FET 57 with ON-OFF control according to the signal. With the ON-OFF operation of the charge control FET 57, the voltage of the power supply line 30 is switched between a voltage Vo of the battery 58 and the output voltage V (= 6 V) of the AC adapter 10.

The voltage detection device 531 of the AC adapter 10 detects a fluctuation of the voltage of the power supply line 30, and the detected result is input to the ID-IC 54 through the electronic apparatus 20 as a send-signal including random numbers. The input signal is processed by the ID-IC 54 according to the AC adapter ID. A binary signal is output according to the process result of the ID-IC 54, and the binary signal switches the switch SWo of the voltage switch device 532. The output voltage control device 533 controls the output control FET 534 with ON-OFF control in response to the switching of the switch SWo so that the output voltage of the AC adapter 10 alternates between 5 V and 6 V. Thus the process result of the ID-IC 54 is sent to the electronic apparatus 20 as a binary signal generated by switching the output voltage of the AC adapter 10.

Further, the switching operation of the output voltage of the AC adapter 10 is described in detail. When the switch SWo is switched to the 6 V side or the 5 V side while the AC adapter 10 outputs 6 V, the output voltage control device 533 outputs 6 V. When the AC adapter 10 outputs 6 V, i.e. the switch SWo is switched to 6 V side, a voltage almost equal to the reference voltage Vref2 is input to the output control device 533 from the voltage switch device 532. In that case, the output control FET is in the normally ON condition. Next, when the switch SWo is switched to the 5 V side, at that time, as the output voltage of the AC adapter 10 is kept at 6 V, the output voltage of the voltage switch device 532 becomes higher than the reference voltage Vref2. The output voltage of the AC adapter 10 is adjusted by operating the ON-OFF control of the output control FET 534 so that the output voltage of the voltage switch device 532 becomes equal to the reference voltage Vref2 and finally reaches 5 V. Thus, the output voltage of the AC adapter 10 can be controlled by switching the switch SWo of the voltage switch device 532.

While the above operation is being performed, the electronic apparatus 20 processes the same random numbers as the random numbers included in the signal sent to the AC adapter 10 by using the ID-IC 56. This arithmetic process corresponds to the process by which the ID-IC 54 of the AC adapter 10 processes using the AC adapter ID.

The voltage detection device 551 of the electronic apparatus 20 detects the fluctuation 5 V/6 V of the power supply line 30, and the detection result is input to the ID-IC 56 as a send-signal from the AC adapter 10. The ID-IC 56 compares the send-signal sent from the AC adapter 10 and the result of the arithmetic process described above. When the send-signal and the arithmetic process result correspond, the electronic apparatus 20 recognizes that the connected AC adapter is the right AC adapter, but if they do not correspond to each other, which indicates that the connected AC adapter is a wrong AC adapter, the electronic apparatus 20 sends a signal to the FET control device 554 by using the ID-IC 56 to turn off the charge control FET 57, so as to the stop supplying the power from the AC adapter 10.

As described above, in many cases, the number of wrong AC adapters is more than that of wrong electronic apparatuses. According to one aspect of the present invention, by assigning an ID signal to the side of an AC adapter, it becomes possible for an electronic apparatus to determine whether an AC adapter is a right AC adapter, and using a wrong AC adapter that may cause damage to an electronic apparatus is prevented.

### [VARIATION]

For an electronic apparatus that is applicable to an AC adapter related to one aspect of this invention, the function of an ID-IC 56 may be included as built-in in the power management IC 5 of FIG. 1 or in the central processing unit (CPU) 7 of FIG. 1. In that case, the cost of an electronic apparatus according to one of the present embodiments is almost equivalent to a conventional electronic apparatus that does not include the communications function.

Although a power supply system according to one of the present embodiments performs communications between an AC adapter and an electronic apparatus using a power line, another communication line may be provided instead of the power line. For such a case, in FIG. 6, the ID-IC 54 of the AC adapter 10 and the ID-IC 56 of the electronic apparatus 20 are connected directly, so that the voltage detection device 531, the voltage switch device 532 of the AC adapter 10 and the voltage detection device 551 of the electronic apparatus 20 become unnecessary.

In the power supply system related to this embodiment, although communications between the AC adapter and the electronic apparatus are provided by using the positive line of the power line, the negative line (grounded in the figure) may be configured for ON-OFF control, and in the same manner as described above, the AC adapter and the electronic apparatus communicate with each other.

In FIG. 3 and FIG. 6, although the AC adapter related to this embodiment includes a battery, it may be an electronic apparatus that does not include a battery. For an electronic apparatus having a battery, the electronic apparatus may be a game apparatus that can be carried, a mobile phone, a notebook personal computer, a personal digital assistant (PDA), or the like. The types of the battery used may be lithium ion batteries, hydrogennickel batteries or any type of battery.

### INDUSTRIAL APPLICABILITY

The present invention may be applied to an AC adapter including an AC/DC converter device, a power supply line for supplying DC power converted by the AC/DC converter device, an electronic apparatus including the AC adapter, and a power supply system including the AC adapter, an electronic apparatus connected to the AC adapter, and a power supply system connected to the AC adapter.

The present application is based on and claims the benefit of Japanese Patent Application No.2005-300863 filed October 14, 2005, the entire contents of which are hereby incorporated herein by reference.

## Claims

1. An AC adapter, comprising:
an AC/DC converter device for transforming alternating-current power to direct-current power;
a power supply line for supplying the direct-current power converted by the AC/DC converter device to an electronic apparatus; and
a memory for storing an AC adapter ID that identifies the AC adapter.

2. The AC adapter as claimed in claim 1, further comprising:
a sender device for switching an electric potential on the power supply line by plural electric potentials for sending a signal to the electronic apparatus.

3. The AC adapter according to claims 1 or 2, further comprising:
a receiver device for detecting plural electric potentials on the power supply line for receiving a signal sent from the electronic apparatus.

4. The AC adapter as claimed in claim 3, further comprising:
a process device for processing the signal received by the receiver device using the AC adapter ID stored in the memory;
wherein a result of the process device is sent by the sender device to the electronic apparatus.

5. The AC adapter as claimed in claim 3, further comprising:
an output control device for controlling a power supply to be supplied to the electronic apparatus,
wherein the output control device is controlled according to the signal sent from the electronic apparatus and received by the receiver device.

6. An electronic apparatus connected to an AC adapter through a power supply line, comprising:
a sender device for sending a signal having random numbers to the AC adapter;
an arithmetic device for processing arithmetically the random numbers;
a receiver device for receiving a signal processed by the AC adapter according to the random numbers and sent from the AC adapter;
a comparator device for comparing the signal received by the receiver device and a processed signal processed by the arithmetic device;
wherein a control signal is sent to the AC adapter for controlling the AC adapter according to the result of the comparator device.

7. The electronic apparatus as claimed in claim 6, wherein the sender device sends a signal to the AC adapter by controlling the power supply line using ON-OFF control.

8. The electronic apparatus as in any of claims 6 or 7, wherein the receiver device receives a signal from the AC adapter by detecting electric potentials switched by plural electronic potentials on the power supply line.

9. The electronic apparatus according to claims 6 or 7, further comprising:
a charge control device;
wherein the sender device sends the signal to the AC adapter by controlling the charge control device with ON-OFF control.

10. A power supply system, comprising:
an AC/DC converter device for transforming an alternating-current power to a direct-current power;
an electronic apparatus supplied with the direct-current power converted by the AC/DC converter device through a power supply line;
wherein the AC adapter includes a memory for storing a data to identify the AC adapter, a first receiver device for receiving a second signal sent from the electronic apparatus, a process device processing the second signal received by the first receiver device according to the data stored in the memory, and a first sender device for sending a processed result of the process device to the electronic apparatus; and
wherein the electronic apparatus includes a second sender device for sending the second signal having random numbers to the AC adapter, an arithmetic device for processing the random numbers, a second receiver device for receiving a first signal processed based on the random numbers by the AC adapter and sent from the AC adapter, a comparator for comparing the first signal received by the electronic apparatus and a signal processed by the arithmetic device, wherein the second signal is sent to the AC adapter to control the AC adapter according to a result of the comparator.

11. The power supply system as claimed in the claim 10, wherein a sending signal and a receiving signal are performed via a power supply line or a communication line only for use in communications.
